# EUROPÄISCHE PATENTSCHRIFT

(11) **EP 1 763 548 B1**
(45) Veröffentlichungstag und Bekanntmachung des Hinweises auf die Patenterteilung: **23.07.2008**
(21) Anmeldenummer: 05738063.6
(22) Anmeldetag: 02.05.2005
(51) Int. Cl.: C08G 18/08, C08J 3/07

(54) **VERFAHREN ZUR HERSTELLUNG VON WÄSSRIGEN POLYURETHAN-DISPERSIONEN MITTELS ENTSPANNUNGS-VERDAMPFUNG**
METHOD FOR PRODUCING AQUEOUS POLYURETHANE DISPERSIONS BY MEANS OF FLASH EVAPORATION
PROCEDE POUR PRODUIRE DES DISPERSIONS DE POLYURETHANNE AQUEUSES AU MOYEN D'UNE VAPORISATION ECLAIR

(30) Priorität: 26.06.2004 DE 102004030944
(43) Veröffentlichungstag der Anmeldung: 21.03.2007
(73) Patentinhaber: Degussa AG, 40474 Düsseldorf (DE)
(72) Erfinder: ORSCHEL, Matthias, 48163 Münster (DE); SASSE, Wolfgang, 45721 Haltern am See (DE)
(86) Internationale Anmeldenummer: PCT/EP2005/051987
(87) Internationale Veröffentlichungsnummer: WO 2006/000492

(56) Entgegenhaltungen:
- EP-A- 0 232 778

## Beschreibung

Die Erfindung betrifft ein neues Verfahren zur Herstellung von lösemittelfreien oder lösemittelarmen, wässrigen Polyurethan-Dispersionen aus lösemittelhaltigen, wässrigen Polyurethan-Dispersionen oder -Lösungen mittels Entspannungs-Verdampfung der organischen Lösemittel oder organischen Lösemittelgemische sowie ein Verfahren zur Herstellung von wässrigen Polyurethan-Dispersionen durch Überführung von hydrophil modifizierten NCO-Prepolymeren oder Polyurethanen in einem, gegebenenfalls wasserhaltigen, organischen Lösemittel oder Lösemittelgemisch in eine wässrige Dispersion oder wässrige Lösung und anschließende Entfernung des organischen Lösemittels oder Lösemittelgemisches mittels Entspannungs-Verdampfung.

Wässrige Polyurethan-Dispersionen werden z. B. für einkomponentige, isocyanatfreie Lacke, Beschichtungen, Dichtmassen, Klebstoffe und Membranen verwendet. Ihre Bedeutung nimmt aus ökologischen (Umweltverträglichkeit, Arbeitssicherheit) und ökonomischen Gründen seit Jahren immer weiter zu. Die Viskosität und das Fliessverhalten sind unabhängig von der molaren Masse, die über einen weiten Bereich eingestellt werden kann. Neben diesen Vorteilen entsprechen diese lösemittelarmen oder lösemittelfreien Produkte in ihren Anwendungsmöglichkeiten bereits weitgehend den lösemittelhaltigen.

Verfahren zur Herstellung von wässrigen Polyurethandispersionen, wobei hierunter sowohl wässrige Dispersionen bzw. Suspensionen von reinen Polyurethanen als auch von Polyurethanharnstoffen zu verstehen sind, sind bekannt und werden beispielsweise in folgenden Literaturstellen beschrieben: Houben-Weyl, Methoden der organischen Chemie, Band E 20, Teil I; Ullmann's Encyclopedia of Industrial Chemistry, Release 2003, 7th Edition, Wiley-VCH Verlag; Adv. Urethane Sci. Technol. 10 (1987), 121-187; DE 198 12 751; DE 199 57 604; WO 96/40811; US 2002/0028877.

Von den genannten Verfahren ist für die vorliegende Erfindung insbesondere das "Acetonverfahren" in Analogie zur Lehre der DE 14 95 745 bzw. zu der DE 14 95 847 von Bedeutung. Hierbei wird im Allgemeinen zunächst ein NCO-Prepolymer hergestellt, welches in einem inerten Lösemittel gelöst wird (gegebenenfalls wird das NCO-Prepolymer auch direkt im inerten Lösemittel hergestellt), worauf sich die Kettenverlängerung in Lösung zum höhermolekularen Polyurethan anschließt. Der Einbau der für die Dispergierung erforderlichen hydrophilen Gruppen erfolgt vorzugsweise entweder durch Einbau von ionische, potentiell ionische oder nicht-ionisch hydrophile Gruppen tragenden Diolen ins Prepolymer oder durch Verwendung entsprechender Amine als Kettenverlängerungsmittel. Die Dispergierung erfolgt diskontinuierlich in Rührkesseln mit Rührer und eventuell Strombrechern. Das verwendete Lösemittel wird in der Regel unmittelbar nach der Dispergierung aus dem Rührkessel abdestilliert. Trotz der hervorragenden Eigenschaften der nach dieser Verfahrensweise gewonnenen Produkte hat das "Acetonverfahren" erhebliche Nachteile. Die langen Destillationszeiten zur Entfernung des Lösemittels verringern die Raum-Zeit-Ausbeute, erhöhen die Herstellkosten und wirken sich auf den Zustand der dispergierten Teilchen, insbesondere auf deren Quellungsgrad, nachteilig aus. Die lange Temperaturbelastung der Dispersion während der Destillation des Lösemittels kann zudem bei temperaturempfindlichen Dispersionen zu Problemen führen.

Auch Verfahren zur Herstellung von wässrigen Polyurethandispersionen durch kontinuierliche Dispergierung sind bekannt. In der DE 22 60 870 wird beispielsweise die Verwendung von speziellen Mischreaktoren beschrieben, die auf der Grundlage der sich ausbildenden Zellarströmungen basieren. Die Abtrennung des eingesetzten Lösemittels wird hier mit Hilfe eines Dünnschichtverdampfers erreicht. Ein derartiger Verdampfer bringt zwar extrem kurze Verweilzeiten und gute Wärmeübergangswerte, führt aber bei filmbildenden Dispersionen zum Anbacken auf der Verdampferoberfläche. Um diesen Nachteil zu umgehen, wird in der DE 3603996 ein Verfahren zur kontinuierlichen Herstellung von wässrigen Polyurethan-Dispersionen in Stachelmischern beschrieben, in dem die destillative Entfernung der Hauptmenge des Lösemittels kontinuierlich mittels eines Umlaufverdampfers erfolgt. Aufgrund der stets gefluteten Verdampferflächen wird auch bei zur Filmbildung neigenden Produkten keine Filmbildung beobachtet. Die so erhaltenen Dispersionen weisen allerdings noch einen Acetongehalt von ca. 10 % auf, welcher durch eine anschließende Destillation in einem herkömmlichen Destillationskessel entfernt werden muss.

Der Erfindung lag daher die Aufgabe zugrunde, ein neues Verfahren zur Entfernung von Lösemitteln aus lösemittelhaltigen, wässrigen Polyurethan-Dispersionen/Lösungen bzw. ein Verfahren zur Herstellung von wässrigen Polyurethan-Dispersionen nach dem "Acetonprozess" zu entwickeln, welches nicht mit den vorgenannten Nachteilen behaftet ist. Diese Aufgabe konnte durch die Bereitstellung des nachstehend näher beschriebenen, erfindungsgemäßen Verfahrens gelöst werden.

Gegenstand der Erfindung ist ein Verfahren zur Herstellung von lösemittelfreien oder lösemittelarmen wässrigen Polyurethan-Dispersionen, dadurch gekennzeichnet, dass die organischen Lösemittel oder die organischen Lösemittelgemische aus lösemittelhaltigen, wässrigen Polyurethan-Dispersionen oder -Lösungen mittels Entspannungs-Verdampfung abgetrennt werden. In einer bevorzugten Ausführungsform des Verfahrens, ist weiterer Gegenstand der Erfindung ein Verfahren zur Entfernung von organischen Lösemitteln oder organischen Lösemittelgemischen aus lösemittelhaltigen, wässrigen Polyurethan-Dispersionen oder Polyurethan-Lösungen mittels Entspannungs-Verdampfung sowie ein Verfahren zur Herstellung von wässrigen Polyurethan-Dispersionen durch Überführung von hydrophil modifizierten NCO-Prepolymeren oder Polyurethanen in einem, gegebenenfalls wasserhaltigen, organischen Lösemittel oder Lösemittelgemisch in eine wässrige Dispersion oder Lösung und anschließende Entfernung des organischen Lösemittels oder Lösemittelgemisches mittels Entspannungs-Verdampfung.

Bei der erfindungsgemäßen Lösemittelabtrennung werden die Brüden durch Einleiten der vorgewärmten, lösemittelhaltigen, wässrigen Polyurethan-Dispersionen oder -Lösungen in Entspannungsbehälter, in dem/denen ein geringerer Druck herrscht, erzeugt. Gleichzeitig sinkt durch die Verdampfung des Lösemittels aus der Dispersion oder Lösung die Temperatur in der verbleibenden Flüssigphase ab, so dass die Temperaturbelastung verringert wird. Dabei ist es nicht erfindungswesentlich, ob die Abtrennung des Lösemittels/Lösemittelgemisches in einem Schritt oder in mehreren Stufen erfolgt. Die Art der Entspannungs-Verdampfung richtet sich nach der Zusammensetzung und den Eigenschaften der jeweiligen lösemittelhaltigen, wässrigen Polyurethan-Dispersion oder -Lösung und des zu ereichenden Restgehaltes des Lösemittels/Lösemittelgemisches. So kann es bei temperaturempfindlichen Dispersionen von Vorteil sein, die Lösemittelabtrennung in mehreren Stufen bei geringen Temperaturen durchzuführen, während robuste Dispersionen in weniger Stufen bei höheren Temperaturen vom Lösemittel/Lösemittelgemisch befreit werden. Dabei ist es nicht erfindungswesentlich, ob die Abtrennung des Lösemittels/Lösemittelgemisches in mehreren Schritten in einer einstufigen Entspannungsapparatur absatzweise, oder in einer, aus mehreren Stufen aufgebauten Entspannungsapparatur absatzweise oder kontinuierlich erfolgt. Dabei kann gegebenenfalls in jedem Schritt/in jeder Stufe der Druck und/oder die Temperatur weiter abgesenkt werden und die freiwerdende Energie, die durch Kondensation der Brüden gewonnen wird, zur Beheizung genutzt werden. Eine dritte Variante ist die Abtrennung des Lösemittels/Lösemittelgemisches in einer einstufigen Entspannungs-Verdampfungs-Apparatur, bei der die Polyurethan-Dispersion oder -Lösung aus dem Entspannungsbehälter kontinuierlich durch einen Flüssigkeitserhitzer geleitet und auf eine höhere Temperatur und einen höheren Druck gebracht wird und anschließend in den Entspannungsbehälter zurückgeleitet wird, in dem ein niedrigerer Druck herrscht. Dadurch sinkt die Lösemittelkonzentration in der wässrigen Polyurethan-Dispersion kontinuierlich ab. Wird die lösemittelhaltige, wässrige Polyurethan-Dispersion/Lösung zuvor in einem Rührkessel diskontinuierlich hergestellt, so wird bevorzugt dieser Rührkessel als Entspannungsbehälter verwendet. Bei allen Varianten ist es nicht erfindungswesentlich, wie die Einleitung der lösemittelhaltigen, wässrigen Polyurethan-Dispersion oder -Lösung in den Entspannungsbehälter erfolgt. Dies kann z. B. durch Verdüsung in den Entspannungsraum oder andere Methoden des Standes der Technik erfolgen.

Die beschriebenen, speziellen Ausführungsformen des erfindungsgemäßen Verfahrens sollen nur die Breite der Anwendbarkeit illustrieren, wobei das erfindungsgemäße Verfahren aber nicht darauf beschränkt ist.

Die Siedepunkte der organischen Lösemittel oder Lösemittelgemische, oder deren Azeotrope mit Wasser, liegen unter dem Siedepunkt von Wasser bei dem entsprechenden Druck, bei dem die Entspannungs-Verdampfung durchgeführt wird. Bei der Lösemittelabtrennung wird gegebenenfalls ein Teil des Wassers mit abgetrennt, was aber nicht erfindungswesentlich ist.

Die Vorteile des erfindungsgemäßen Verfahrens sind darin zu sehen, dass gegenüber dem "Acetonverfahren" nach dem Stand der Technik die Entfernung des Lösemittels deutlich schneller und Produkt schonender erfolgt, wodurch erreicht wird, dass beim erfindungsgemäßen Verfahren Produkte erhalten werden, die bezüglich der Eigenschaften den Produkten des konventionellen "Acetonprozesses" gleichwertig oder überlegen sind. Außerdem wird eine deutlich bessere Raum-Zeit-Ausbeute erreicht. Daneben führt die Verwendung der Entspannungs-Verdampfung bei zur Filmbildung neigenden Produkten nicht zur Filmbildung auf den Verdampferoberflächen. Die durch die Anwendung des erfindungsgemäßen Verfahrens erzielten Restgehalte des Lösemittels in der Polyurethan-Dispersion machen eine weitere destillative Aufarbeitung überflüssig. Das erfindungsgemäße Verfahren kann kontinuierlich und diskontinuierlich durchgeführt werden.

In einer besonders bevorzugten Ausführungsform der Erfindung, werden nach dem erfindungsgemäßen Verfahren die im Folgenden näher beschriebenen Polyurethan-Dispersionen hergestellt. Die Herstellung von wässrigen Polyurethan-Dispersionen nach dem "Aceton-Prozess" umfasst die Schritte: Herstellung eines hydrophil modifizierbaren oder modifizierten Prepolymers (ggf. in einem inerten, organischen Lösemittel/ Lösemittelgemisch); gegebenenfalls Lösung in einem inerten, organischen Lösemittel/ Lösemittelgemisch; gegebenenfalls Neutralisation eines anionisch oder kationisch modifizierbaren Prepolymers/Polyurethans zu einem anionisch oder kationisch modifizierten Prepolymer/Polyurethan; Kettenverlängerung; Dispergierung; Abtrennung des Lösemittels/Lösemittelgemisches.

Für das erfindungsgemäße Verfahren geeignete anionisch oder kationisch modifizierbare (also nicht neutralisierte) oder nicht-ionisch modifizierte Polyurethan-Prepolymere sind literaturbekannt (s. o.) und werden durch Polyadditionsreaktionen von Polyolen und Polyisocyanat-Komponenten und gegebenenfalls Lösemitteln/Lösemittelgemischen und/oder Katalysatoren hergestellt. Es werden polymere und/oder monomere Polyole mit zwei oder mehreren gegenüber Polyisocyanaten reaktiven Hydroxylgruppen eingesetzt, wie z. B. Polyesterpolyole, Polyetherpolyole, Polyhydroxypolycarbonate, Polyhydroxypolyacetale, Polyhydroxypolyacrylate, Polyhydroxypolyesteramide, Polyhydroxypolythioether, Polyalkylenpolyole, Polyhydroxypolycaprolactone, vinyl-modifizierte Polyetherpolyole, makromonomere Polyole, Techelene oder Polyhydroxyepoxidharze oder Gemische daraus und/oder sämtliche niedermolekularen Polyole wie z. B. 1,2-Ethandiol, 1,2-Propandiol, 1,2-Propylenglykol, 1,3-Propandiol, 1,3-Propylenglykol, 1,4-Butandiol, 1,4-Butylenglykol, 1,6,-Hexandiol, 2-Methyl-1,3-propandiol, 2,2-Dimethylol-1,3-propandiol, 1,4-Bis-(hydroxymethyl)-cyclohexan, 1,2,3-Propantriol, 2-Hydroxymethyl-2-methyl-1,3-propanol, 2-Ethyl-2-hydroxymethyl-1,3-propandiol, 2,2-Bis-(hydroxymethyl)-1,3-propandiol oder Gemische daraus. Beispiele von bevorzugten Polyisocyanat-Komponenten sind Polyisocyanate, Polyisocyanat-Derivate oder Polyisocyanat-Homologe mit zwei oder mehreren aliphatischen, cycloaliphatischen oder aromatischen Isocyanat-Gruppen. Geeignet sind insbesondere die in der Polyurethanchemie hinreichend bekannten Polyisocyanate oder Kombinationen daraus, wie z. B. 1,4,-Diisocyanatobutan, 1,6-Diisocyanatohexan (HDI), 1,12-Diisocyanatododecan, 1,4-Diisocyanatocyclohexan, 1-Isocyanato-5-isocyanatomethyl-3,3,5-trimethyl-cyclohexan (IPDI), Bis-(4-isocyanatocyclohexyl)-methan (H₁₂MDI), 1,3-Bis-(1-isocyanato-1-methyl)-benzol (XDI), 1,3-Bis-(1-isocyanato-1-methyl-ethyl)-benzol (m-TMXDI), 2,4-Diisocyanatotoluol (TDI), Bis-(4-isocyanatophenyl)-methan (MDI), 1,6-Diisocyanato-2,2,4(2,4,4)-trimethylhexan (TMDI) und gegebenenfalls Isomere, höhere Homologe bzw. technische Gemische der einzelnen Polyisocyanate. Weiterhin sind auch Mischungen und Derivate der oben genannten Diisocyanate einsetzbar, die Allophanat-, Biuret-, Carbodiimid-, Isocyanurat-, Uretdion- oder Urethan-Gruppen aufweisen und gegebenenfalls auch blockierte Polyisocyanate, wie sie z. B. in DE 196 26 886 beschrieben sind.

Als anionisch, kationisch und/oder nicht-ionisch dispergierend wirkende Verbindungen werden solche eingesetzt, die z. B. Carboxylat-, Sulfonat-, Phosphonat-, Sulfonium-, Ammonium-, Phosphonium-Gruppen oder Gruppen, die durch Salzbildung in die vorgenannten Gruppen überführt werden können (sogenannte anionisch oder kationisch modifizierbare Gruppen/Verbindungen), und/oder Polyethergruppen (sogenannte nicht-ionisch emulgierende Gruppen) enthalten und durch vorhandene isocyanatreaktive Gruppen in die Prepolymere eingebaut werden können, mit zwei oder mehreren gegenüber Polyisocyanaten reaktiven Gruppen, wie z. B. Verbindungen mit OH- und/oder NH₂-Gruppen. Vertreter dieser Verbindungen sind z. B. 2-Hydroxymethyl-3-hydroxypropansäure, 2-Hydroxymethyl-2-methyl-3-hydroxy-propansäure, 2-Hydroxymethyl-2-ethyl-3-hydroxypropansäure, 2-Hydroxymethyl-2-propyl-3-hydroxypropansäure, Citronensäure, Weinsäure, Alanin, Taurin, 2-Aminoethylaminoethansulfonsäure, auf Alkoholen gestartete Polyethylenglykole, Polypropylenglykole, Polybutylenglykole, deren Blockcopolymere und Monomethylether dieser Polyglykole sowie sämtliche entsprechend modifizierte polymere Polyole.

Als Lösemittel werden gegenüber Isocyanatgruppen inerte Lösemittel bevorzugt, die einen Siedepunkt unter dem von Wasser besitzen (bei dem entsprechenden Druck, bei dem die Entspannungs-Verdampfung durchgeführt wird). Dies sind z. B. Benzol, Essigsäureethylester, Aceton, Methylethylketon, Diethylether, Tetrahydrofuran, Essigsäuremethylester, Acetonitril, Chloroform, Methylenchlorid, Tetrachlorkohlenstoff, 1,2-Dichlorethan, 1,1,2-Trichlorethan, Tetrachlorethylen oder Mischungen aus denselben. Bevorzugt werden mit Wasser mischbare Lösemittel/Lösemittelgemische, ganz bevorzugt Aceton eingesetzt. In speziellen Fällen können jedoch auch solche Lösemittel/Lösemittelgemische eingesetzt werden, die gegenüber Isocyanatgruppen nicht inert sind und einen Siedepunkt unter dem von Wasser besitzen, wie z. B. Alkohole wie Methanol, Ethanol, oder Isopropanol. Die Lösemittel können unter Umständen auch Wasser enthalten.

Neben den Lösemittel/Lösemittelgemischen, die nach dem Dispergierschritt abgetrennt werden, können noch weitere Hilfslösemittel, die einen Siedepunkt über dem von Wasser besitzen, zugesetzt werden, wie z. B. Diisopropylketon, Xylol, Dimethylformamid, Dimetylenacetamid, Dimethylsulfoxid, Methylglykolacetat, Ethylglkolacetat, Butylacetat, oder N-Methylpyrrolidon. Diese Lösemittel verbleiben letztendlich in den lösemittelarmen Dispersionen.

Als Neutralisations-Komponente für anionisch modifizierbare Polyurethan-Prepolymere werden Basen eingesetzt, z. B. tertiäre Amine wie z. B. N,N-Dimethylethanolamin, N-Methyldiethanolamin, Triethanolamin, N,N-Dimethylisopropanolamin, N-Methyl-diiospropanolamin, Triiso-propylamin, N-Methyl-morpholin, N-Ethyl-morpholin, Triethylamin oder Ammoniak, oder Alkalihydroxide wie z. B. Lithiumhydroxid, Natriumhydroxid oder Kaliumhydroxid. Für kationisch modifizierbare Polyurethan-Prepolymere verwendet man entsprechende Säuren, wie z. B. Ameisensäure, Essigsäure, Propionsäure, Schwefelsäure, Schwefelsäuredimethylester oder Bernsteinsäure. Bei den nicht-ionisch modifizierten Polyurethan-Prepolymeren entfällt der Neutralisationsschritt.

Im Reaktionsschritt, bei dem die Molmassenerhöhung stattfindet, verwendet man als Kettenverlängerer-Komponente Polyamine mit zwei oder mehreren gegenüber Polyisocyanaten reaktiven Amino-Gruppen. Geeignete Polyamine sind z. B. Adipinsäuredihydrazid, Ethylendiamin, Diethylentriamin, Triethylentetramin, Tetraethylen-pentamin, Pentaethylenhexamin, Dipropylentriamin, Hexamethylendiamin, Hydrazin, Isophorondiamin, N-(2-Aminoethyl)-2-aminoethanol, 1,3- und 1,4-Phenylendiamin, 4,4'-Diphenylmethandiamin, aminofunktionelle Polyethylenoxide bzw. Polypropylenoxide, Addukte aus Salzen der 2-Acrylamido-2-methylpropan-1-sulfonsäure und Ethylendiamin oder beliebige Kombinationen von Polyaminen.

Die einzelnen Verfahrensschritte der Herstellung von wässrigen Polyurethan-Dispersionen nach dem "Acetonprozess" erfolgen in beliebiger und bekannter Weise kontinuierlich oder diskontinuierlich nach dem Stand der Technik. Die Dispergierung bzw. die Vermischung mit der Hauptmenge des Wassers erfolgt mit geeigneten Mischaggregaten. Bei der diskontinuierlichen Herstellung sind das z. B. Rührkessel, die mit geeigneten Rührern und eventuell Strombrechern ausgerüstet sind. Zur kontinuierlichen Herstellung können neben den oben genannten Verfahren z. B. auch die in GB 14 14 930, DE 22 60 870, DE 23 11 635, DE 23 47 299, DE 23 44 135, DE 33 19 921, DE 36 03 996, US 4742095 oder bei M. Keyvani, Advances in Polymer Technology, 22 (2003), 218-224 beschriebenen Rühraggregate oder Rotor-Stator-Mischelemente, aber auch statische Mischer eingesetzt werden. Diese Verfahrensweisen sind aber nicht erfindungswesentlich.

Erfindungswesentlich ist nur die Abtrennung des Lösemittels/Lösemittelgemisches aus lösemittelhaltigen, wässrigen Polyurethan-Dispersionen oder -Lösungen durch Entspannungs-Verdampfung. Geeignete Apparaturen und das Prinzip des Verfahrens sind beschrieben in z. B. Ullmann's Encyclopedia of Industrial Chemistry, Release 2003, 7th Edition, Wiley-VCH Verlag; Henglein, Lexikon der chemischen Technik, 1. Auflage, VCH Verlagsgesellschaft, 1988; Vauck, Müller, Grundoperationen chemischer Verfahrenstechnik, 11. Auflage, Deutscher Verlag für Grundstoffindustrie, 2000.

In einer bevorzugten beispielhaften Ausführungsform des erfindungsgemäßen Verfahrens wird eine lösemittelhaltige, wässrige Polyurethan-Dispersion oder -Lösung aus einer Vorlage kontinuierlich durch einen Flüssigkeitserhitzer und eine Düse in einen sog. Brüdenraum geleitet, in dem der Druck soweit reduziert wurde, dass ein Teil des Lösemittels verdampft. Die Brüden werden aus dem Brüdenraum entfernt und in einem Wärmetauscher kondensiert. Anschließend wird die aufkonzentrierte Dispersion durch einen weiteren Flüssigkeitserhitzer in einen weiteren Brüdenraum geleitet. Dabei können z. B. die Brüden des ersten Brüdenraumes als Heizmedium genutzt werden. Im zweiten Brüdenraum erfolgt ebenfalls Entspannungs-Verdampfung. Dabei kann der Druck im zweiten Brüdenraum gegenüber dem ersten Brüdenraum weiter reduziert sein. Die Anzahl der Entspannungs-Verdampfungs-Stufen richtet sich dabei nach der zu erreichenden Zielkonzentration des Lösemittels. Am Ende wird eine wässrige Polyurethan-Dispersion erhalten, die, je nach Aufgabenstellung, noch eine Restkonzentration an Lösemittel aufweisen kann.

Die folgenden Beispiele dienen der weiteren Erläuterung des erfindungsgemäßen Verfahrens, ohne dass dieses darauf beschränkt ist.

### Beispiel 1

### Herstellung einer lösemittelhaltigen, wässrigen Polyurethan-Dispersion

In einem Rührkessel wurden 6792 g einer 50%igen Lösung von VESTANAT T1890 (Hersteller: Degussa AG) in Aceton, 2068 g Isophorondiisocyanat, 20 g Dibutylzinnlaurat, 624 g Dimethylolpropionsäure und 3492 g Aceton vorgelegt, die Temperatur auf 60 °C und der Rührer auf 180 U/min geregelt. Anschließend wurden 1248 g Trimethylolpropan und 9583 g Oxyester T1136 (Hersteller: Degussa AG) zugegeben. Nach Erreichen einer NCO-Zahl von 0,5 % wurden 226 g Methylethylketoxim und 1 h später 544 g Diethylaminoethanol und eine Lösung aus 7500 g VESTANAT B 1358/100 (Hersteller: Degussa AG), 7500 g Aceton, 128 g Tinuvine 900 (Hersteller: Ciba Geigy) und 128 g Tinuvine 292 (Hersteller: Ciba Geigy) zugegeben. Die so erhaltene, acetonhaltige Harzlösung wurde anschließend in 59800 g Wasser zu einer acetonhaltigen, wässrigen Polyurethan-Dispersion dispergiert (Acetongehalt: 14,4 %; Feststoffgehalt: 25,6 %).

### Vergleichsbeispiel A

### Konventionelle Entfernung des Lösemittels mittels Destillation

48600 g der acetonhaltigen, wässrigen Polyurethan-Dispersion aus Beispiel 1 wurden in einem Reaktor mit einem Volumen von ca. 50 L mit Inter-MIG-Rührwerk und aufgesetzter Destillationskolonne auf 60 °C aufgeheizt und Vakuum angelegt. Aufgrund des starken Schäumens der Dispersion wurde der Druck langsam, innerhalb von 10,5 h von 600 auf 60 mbar reduziert. Die erhaltene Dispersion wurde mit Wasser auf einen Feststoffanteil von 33,7 % korrigiert und die Kenndaten bestimmt (pH-Wert: 8,7; Viskosität: 111 mPa*s; mittlerer Teilchengrößendurchmesser: 115 nm; Acetongehalt: 0,39 %).

### Beispiel 2

### Entfernung des Lösemittels mittels Entspannungs-Verdampfung

48000 g der acetonhaltigen, wässrigen Polyurethan-Dispersion aus Beispiel 1 wurden in einer Vorlage bei einem Druck von 1 bar auf eine Temperatur von 59 °C aufgeheizt und kontinuierlich durch eine Rohrleitung (Innendurchmesser = 6 mm) in ein Entspannungsgefäß geleitet (Durchsatz: 20,2 kg/h), in dem ein Druck von 137 mbar herrschte. Die entstandenen Brüden wurden durch einen Seitenabzug entnommen und in einem Kühler kondensiert. Das dem Sumpf entnommene Produkt wies einen Acetongehalt von 3,8 % auf und wurde zwei weitere Male in der Apparatur eingesetzt. Dabei waren die Bedingungen dem ersten Durchsatz vergleichbar, lediglich der Druck wurde weiter abgesenkt (auf 90 mbar und anschließend auf 64 mbar) und der Durchsatz erhöht (auf 25,4 kg/h und anschließend auf 30,1 kg/h). Dadurch wurde der Acetongehalt stufenweise weiter abgesenkt (auf 1,6 % und anschließend auf 0,4 %). Der gesamte Prozess der Lösemittelabtrennung dauerte 5,5 h. Die erhaltene Dispersion wurde mit Wasser auf einen Feststoffanteil von 33,3 % korrigiert und die Kenndaten bestimmt (pH-Wert: 8,9; Viskosität: 95 mPa*s; Teilchengrößendurchmesser: 110 nm; Acetongehalt: 0,41 %).

## Patentansprüche

1. Verfahren zur Herstellung von lösemittelfreien oder lösemittelarmen wässrigen Polyurethan-Dispersionen aus lösemittelhaltigen, wässrigen Polyurethan-Dispersionen oder -Lösungen,
**dadurch gekennzeichnet,**
**dass** die organischen Lösemittel oder die organischen Lösemittelgemische aus den lösemittelhaltigen, wässrigen Polyurethan-Dispersionen oder -Lösungen mittels Entspannungs-Verdampfung abgetrennt werden.

2. Verfahren zur Entfernung von organischen Lösemitteln oder organischen Lösemittelgemischen aus lösemittelhaltigen, wässrigen Polyurethan-Dispersionen oder Polyurethan-Lösungen mittels Entspannungs-Verdampfung.

3. Verfahren nach mindestens einem der vorherigen Ansprüche,
**dadurch gekennzeichnet,**
**dass** die Lösemittel- oder Lösemittelgemischabtrennung kontinuierlich oder diskontinuierlich in einer oder mehreren Entspannungs-Verdampfungs-Stufen durchgeführt wird.

4. Verfahren nach mindestens einem der vorherigen Ansprüche,
**dadurch gekennzeichnet,**
**dass** bei Verwendung von mehreren Entspannungs-Verdampfungs-Stufen der Druck und/oder die Temperatur stufenweise reduziert wird/werden.

5. Verfahren nach mindestens einem der vorherigen Ansprüche,
**dadurch gekennzeichnet,**
**dass** bei der Lösemittel- oder Lösemittelgemischabtrennung auch teilweise Wasser mit abgetrennt wird.

6. Verfahren nach mindestens einem der vorherigen Ansprüche,
**dadurch gekennzeichnet,**
**dass** zur Herstellung der lösemittelhaltigen, wässrigen Polyurethan-Dispersionen oder - Lösungen gegenüber Isocyanatgruppen inerte oder reaktive Lösemittel eingesetzt werden.

7. Verfahren nach mindestens einem der vorherigen Ansprüche,
**dadurch gekennzeichnet,**
**dass** die Lösemittel oder Lösemittelgemische bei dem Druck, bei dem die Entspannungs-Verdampfung durchgeführt wird, einen Siedepunkt unter dem von Wasser besitzen oder dass deren Azeotrop mit Wasser unterhalb dem Siedepunkt von Wasser liegt.

8. Verfahren nach mindestens einem der vorherigen Ansprüche,
**dadurch gekennzeichnet,**
**dass** mit Wasser mischbare Lösemittel/Lösemittelgemische eingesetzt werden.

9. Verfahren nach mindestens einem der vorherigen Ansprüche,
**dadurch gekennzeichnet,**
**dass** wasserhaltige Lösemittel eingesetzt werden.

10. Verfahren nach mindestens einem der vorherigen Ansprüche,
**dadurch gekennzeichnet,**
**dass** die Abtrennung des Lösemittels/Lösemittelgemisches in einer einstufigen Entspannungs-Verdampfungs-Apparatur, bei der die Polyurethan-Dispersion oder Lösung aus dem Entspannungsbehälter kontinuierlich durch einen Flüssigkeitserhitzer geleitet und auf eine höhere Temperatur und einen höheren Druck gebracht wird und anschließend in den Entspannungsbehälter zurückgeleitet wird, in dem ein niedriger Druck herrscht, erfolgt.

11. Verfahren nach mindestens einem der vorherigen Ansprüche,
**dadurch gekennzeichnet,**
**dass** die lösemittelhaltige, wässrige Polyurethan-Dispersion/Usung zuvor in einem Rührkessel diskontinuierlich hergestellt, und dieser Rührkessel als Entspannungsbehälter verwendet wird.

12. Verfahren nach mindestens einem der vorherigen Ansprüche,
**dadurch gekennzeichnet,**
**dass** zur Herstellung der lösemittelhaltigen, wässrigen Polyurethan-Dispersionen oder - Lösungen noch weitere Hilfslösemittel zugesetzt werden, die in der fertigen lösemittelarmen Dispersion verbleiben.

13. Verfahren zur Herstellung von wässrigen Polyurethan-Dispersionen durch Überführung von hydrophil modifizierten NCO-Prepolymeren und Polyurethanen in einem, gegebenenfalls wasserhaltigen, organischen Lösemittel oder Lösemittelgemisch in eine lösemittelhaltige, wässrige Dispersion oder Lösung und anschließende Entfernung des organischen Lösemittels oder Lösemittelgemisches mittels Entspannungs-Verdampfung.

14. Verfahren nach Anspruch 13,
**dadurch gekennzeichnet,**
**dass** die Herstellung der lösemittelhaltigen, wässrigen Polyurethan-Dispersion oder - Lösung kontinuierlich oder diskontinuierlich erfolgt.

15. Verfahren nach den Ansprüchen 13-14,
**dadurch gekennzeichnet,**
**dass** die Herstellung der wässrigen Polyurethan-Dispersionen folgende Schritte umfasst: a) Herstellung eines hydrophil modifizierbaren oder modifizierten Polyurethan-Prepolymeren, gegebenenfalls in einem organischen Lösemittel/Lösemittelgemisch; b) gegebenenfalls Lösung in einem organischen Lösemittel/Lösemittelgemisch; c) gegebenenfalls Neutralisation eines anionisch oder kationisch modifizierbaren Prepolymers/Polyurethans zu einem anionisch oder kationisch modifizierten Prepolymer/Polyurethan; d) gegebenenfalls Kettenverlängerung; e) Dispergierung; f) Abtrennung des Lösemittels/Lösemittelgemisches nach mindestens einem der vorherigen Ansprüche.

16. Verfahren nach mindestens einem der vorherigen Ansprüche,
**dadurch gekennzeichnet,**
**dass** als Ausgangsverbindungen für die Herstellung der Polyurethan-Prepolymeren Polyisocyanate, ausgewählt aus 1,4,-Diisocyanatobutan, 1,6-Diisocyanatohexan (HDI), 1, 12-Diisocyanatododecan, 1,4-Diisocyanatocyclohexan, 1-Isocyanato-5-isocyanatomethyl-3,3,5-trimethyl-cyclohexan (IPDI), Bis-(4-isocyanatocyclohexyl)-methan (H₁₂MDI), 1,3-Bis-(1-isocyanato-1-methyl)-benzol (XDI), 1,3-Bis-(1-isocyanato-1-methyl-ethyl)-benzol (m-TMXDI), 2,4-Diisocyanatotoluol (TDI), Bis-(4-isocyanatophenyl)-methan (MDI), 1,6-Diisocyanato-2,2,4(2,4,4)-trimethylhexan (TMDI), eingesetzt werden.

## Claims

1. Process for preparing solvent-free or low-solvent aqueous polyurethane dispersions from solvent-containing, aqueous polyurethane dispersions or solutions,
**characterized in that**
the organic solvents or the organic solvent mixtures are removed from the solvent-containing, aqueous polyurethane dispersions or solutions by means of flash evaporation.

2. Process for removing organic solvents or organic solvent mixtures from solvent-containing, aqueous polyurethane dispersions or polyurethane solutions by means of flash evaporation.

3. Process according to at least one of the preceding claims,
**characterized in that**
the solvent or solvent mixture removal is carried out continuously or batchwise in one or more flash evaporation stages.

4. Process according to at least one of the preceding claims,
**characterized in that**
the pressure and/or the temperature is/are reduced stepwise when a plurality of flash evaporation stages is used.

5. Process according to at least one of the preceding claims,
**characterized in that**
some water is also removed in the solvent or solvent mixture removal.

6. Process according to at least one of the preceding claims,
**characterized in that**
the solvent-containing, aqueous polyurethane dispersions or solutions are prepared using solvents inert or reactive toward isocyanate groups.

7. Process according to at least one of the preceding claims,
**characterized in that**
the solvents or solvent mixtures, at the pressure at which the flash evaporation is carried out, have a boiling point below that of water, or their azeotrope with water is below the boiling point of water.

8. Process according to at least one of the preceding claims,
**characterized in that**
water-miscible solvents/solvent mixtures are used.

9. Process according to at least one of the preceding claims,
**characterized in that**
aqueous solvents are used.

10. Process according to at least one of the preceding claims,
**characterized in that**
the solvent/solvent mixture is removed in a single-stage flash evaporation apparatus in which the polyurethane dispersion or solution is passed from the flash vessel continuously through a liquid heater and brought to a higher temperature and a higher pressure and subsequently passed back into the flash vessel in which the pressure is lower.

11. Process according to at least one of the preceding claims,
**characterized in that**
the solvent-containing, aqueous polyurethane dispersion/solution is prepared beforehand batchwise in a stirred tank, and this stirred tank is used as the flash vessel.

12. Process according to at least one of the preceding claims,
**characterized in that**
the solvent-containing, aqueous polyurethane dispersions or solutions are prepared by adding still further auxiliary solvents which remain in the finished low-solvent dispersion.

13. A process for preparing aqueous polyurethane dispersions by converting hydrophilically modified NCO prepolymers and polyurethanes in an optionally aqueous, organic solvent or solvent mixture to a solvent-containing, aqueous dispersion or solution and subsequently removing the organic solvent or solvent mixture by means of flash evaporation.

14. Process according to Claim 13,
**characterized in that**
the solvent-containing, aqueous polyurethane dispersion or solution is prepared continuously or batchwise.

15. Process according to Claims 13-14,
**characterized in that**
the preparation of the aqueous polyurethane dispersions comprises the following steps: a) preparing a hydrophilically modifiable or modified polyurethane prepolymers, optionally in an organic solvent/solvent mixture; b) optionally dissolving in an organic solvent/solvent mixture; c) optionally neutralizing an anionically or cationically modifiable prepolymer/polyurethane to give an anionically or cationically modified prepolymer/polyurethane; d) optionally extending the chain; e) dispersion; f) removing the solvent/solvent mixture according to at least one of the preceding claims.

16. Process according to at least one of the preceding claims,
**characterized in that**
the starting compounds used for the preparation of the polyurethane prepolymers are polyisocyanates selected from 1,4-diisocyanatobutane, 1,6-diisocyanatohexane (HDI), 1,12-diisocyanatododecane, 1,4-diisocyanatocyclohexane, 1-isocyanato-5-isocyanatomethyl-3,3,5-trimethylcyclohexane (IPDI), bis(4-isocyanatocyclohexyl)methane (H₁₂MDI), 1,3-bis(1-isocyanato-1-methyl)benzene (XDI), 1,3-bis(1-isocyanato-1-methylethyl)benzene (m-TMXDI), 2,4-diisocyanatotoluene (TDI), bis(4-isocyanatophenyl)methane (MDI), 1,6-diisocyanato-2,2,4(2,4,4)-trimethylhexane (TMDI).

## Revendications

1. Procédé de préparation de dispersions aqueuses de polyuréthanne sans solvant ou pauvres en solvant à partir de dispersions ou solutions aqueuses de polyuréthanne avec solvant,
**caractérisé en ce que :**
les solvants organiques ou les mélanges de solvants organiques sont séparés des dispersions ou solutions aqueuses de polyuréthanne avec solvant par dilatation-évaporation.

2. Procédé d'élimination de solvants organiques ou de mélanges de solvants organiques hors de dispersions de polyuréthanne ou de solutions de polyuréthanne aqueuses contenant un solvant par dilatation-évaporation.

3. Procédé selon au moins l'une des revendications précédentes,
**caractérisé en ce que :**
la séparation des solvants ou des mélanges de solvants s'effectue en mode continu ou discontinu en une ou plusieurs étapes de dilatation-évaporation.

4. Procédé selon au moins l'une des revendications précédentes,
**caractérisé en ce que :**
en cas de mise en oeuvre de plusieurs étapes de dilatation-évaporation, la pression et/ou la température diminuent par paliers.

5. Procédé selon au moins l'une des revendications précédentes,
**caractérisé en ce que :**
lors de la séparation des solvants ou des mélanges de solvants, de l'eau est également séparée en même temps.

6. Procédé selon au moins l'une des revendications précédentes,
**caractérisé en ce que :**
pour la préparation des dispersions ou solutions aqueuses de polyuréthanne avec solvant, on emploie des solvants inertes ou réactifs par rapport aux groupes isocyanate.

7. Procédé selon au moins l'une des revendications précédentes,
**caractérisé en ce que :**
les solvants ou mélanges de solvants possèdent, à la pression à laquelle a lieu la dilatation-évaporation, un point d'ébullition inférieur à celui de l'eau ou **en ce que** leur azéotrope avec l'eau se situe en dessous du point d'ébullition de l'eau.

8. Procédé selon au moins l'une des revendications précédentes,
**caractérisé en ce qu'**on emploie des solvants/mélanges de solvants miscibles à l'eau.

9. Procédé selon au moins l'une des revendications précédentes,
**caractérisé en ce qu'**on emploie des solvants contenant de l'eau.

10. Procédé selon au moins l'une des revendications précédentes,
**caractérisé en ce que :**
la séparation du solvant/mélange de solvants a lieu dans un appareil de dilatation/évaporation à une étape, la dispersion ou solution de polyuréthanne étant conduite hors du récipient de dilatation en continu à travers un appareil de chauffe de liquide et étant portée à une température supérieure et à une pression supérieure, puis étant reconduite dans le récipient de dilatation, où règne une pression inférieure.

11. Procédé selon au moins l'une des revendications précédentes,
**caractérisé en ce que :**
la dispersion/solution aqueuse de polyuréthanne avec solvant est d'abord préparée dans un mélangeur en mode discontinu et ce mélangeur est utilisé comme récipient de dilatation.

12. Procédé selon au moins l'une des revendications précédentes,
**caractérisé en ce que :**
pour la préparation des dispersions ou solutions aqueuses de polyuréthanne avec solvant on ajoute encore d'autres adjuvants de dissolution qui restent dans la dispersion pauvre en solvant finale.

13. Procédé de préparation de dispersions aqueuses de polyuréthanne par transformation de prépolymères de NCO modifiés hydrophiles et de polyuréthannes dans un solvant organique ou mélange de solvants organiques contenant éventuellement de l'eau, en une dispersion ou solution aqueuse avec solvant et élimination consécutive du solvant organique ou mélange de solvants organiques par dilatation-évaporation.

14. Procédé selon la revendication 13,
**caractérisé en ce que :**
la préparation de la dispersion ou solution aqueuse de polyuréthanne avec solvant se fait en mode continu ou discontinu.

15. Procédé selon les revendications 13-14,
**caractérisé en ce que** la préparation des dispersions aqueuses de polyuréthanne englobe les étapes suivantes :
a) préparation d'un prépolymère de polyuréthanne modifiable ou modifié hydrophile, éventuellement dans un solvant/mélange de solvants organique;
b) éventuelle dissolution dans un solvant/mélange de solvants organique;
c) éventuelle neutralisation d'un prépolymère de polyuréthanne anioniquement ou cationiquement modifiable en un prépolymère de polyuréthanne anioniquement ou cationiquement modifié;
d) éventuelle élongation de chaîne;
e) dispersion;
f) séparation du solvant/mélange de solvants selon au moins l'une des revendications précédentes.

16. Procédé selon au moins l'une des revendications précédentes,
**caractérisé en ce qu'**on utilise comme composés de départ pour la préparation des prépolymères de polyuréthanne des polyisocyanates choisis parmi les 1,4-diisocyanatobutane, 1,6-diisocyanatohexane (HDI), 1,12-diisocyanatododécane, 1,4-diisocyanatocyclohexane, 1-isocyanato-5-isocyanatométhyl-3,3,5-triméthyl-cyclohexane (IPDI), bis-(4-isocyanatocyclohexyl)-méthane (H₁₂MDI), 1,3-bis-(1-isocyanato-1-méthyl)-benzène (XDI), 1,3-bis-(1-isocyanato-1-méthyl-éthyl)-benzène (m-TMXDI), 2,4-diisocyanatotoluène (TDI), bis-(4-isocyanatophényl)-méthane (MDI), 1,6-diisocyanato-2,2,4(2,4,4)-triméthylhexane (TMDI).
